# EUROPÄISCHE PATENTANMELDUNG

(11) **EP 2 161 170 A2**
(43) Veröffentlichungstag der Anmeldung: **10.03.2010**
(21) Anmeldenummer: 09100124.8
(22) Anmeldetag: 18.02.2009
(51) Int. Cl.: B60S 1/34

(54) **Scheibenwischerantrieb**

(30) Priorität: 09.09.2008 DE 102008041906
(71) Anmelder: Robert Bosch GmbH, 70442 Stuttgart (DE)
(72) Erfinder: Mueller, Erich, 77815 Buehl-Vimbuch (DE)

(57) **Zusammenfassung**

Ein Scheibenwischerantrieb weist eine Abtriebswelle (11) auf, die in einer in einem Gehäuseteil des Scheibenwischerantriebs (3) aufgenommenen Exzenterbuchse (13) drehbar gelagert ist. An der Antriebswelle (11) ist ein Sicherungsring (14) gehalten, der unmittelbar benachbart zu einer Stirnseite (18) der Exzenterbuchse (13) angeordnet ist, wobei in die Stirnseite (18) der Exzenterbuchse (13) eine ringförmige Nut eingebracht ist.

## Beschreibung

Die Erfindung bezieht sich auf einen Scheibenwischerantrieb nach dem Oberbegriff des Anspruches 1.

### Stand der Technik

Die DE 103 13 734 A1 zeigt einen Scheibenwischerantrieb für eine Scheibenwischereinrichtung in einem Kraftfahrzeug, mit einem elektrischen Antriebsmotor, dessen Ankerwelle über ein Getriebe eine Abtriebswelle antreibt, die den Scheibenwischerarm in eine pendelnde Drehbewegung versetzt. Auf der Abtriebswelle sitzt ein Schneckenrad, welches mit einer Schnecke auf der Ankerwelle des elektrischen Antriebsmotors kämmt. Die Abtriebswelle ist in einer Exzenterbuchse gelagert, die zur Einstellung des Achsabstandes zwischen der Ankerwelle und der Abtriebswelle verdrehbar im Gehäuse montierbar ist.

Zur Sicherung der Exzenterbuchse auf der Abtriebswelle müssen geeignete Befestigungsmaßnahmen vorgesehen werden. Hierbei ist darauf zu achten, dass es aufgrund der Relativdrehbewegung der Abtriebswelle gegenüber der Exzenterbuchse zu keinen Abnutzungserscheinungen kommt.

### Offenbarung der Erfindung

Der Erfindung liegt die Aufgabe zugrunde, mit einfachen konstruktiven Maßnahmen einen Scheibenwischerantrieb so auszubilden, dass die Gefahr der Abnutzung von Bauteilen des Antriebs reduziert ist.

Diese Aufgabe wird erfindungsgemäß mit den Merkmalen des Anspruches 1 gelöst. Die Unteransprüche geben zweckmäßige Weiterbildungen an.

Der erfindungsgemäße Scheibenwischerantrieb umfasst eine Abtriebswelle, die üblicherweise über ein Getriebe von der Ankerwelle eines elektrischen Antriebsmotors angetrieben wird. Das Getriebe umfasst beispielsweise ein fest mit der Abtriebswelle verbundenes Schneckenrad und eine Schnecke auf der Ankerwelle des elektrischen Antriebsmotors. Die Abtriebswelle ist in einer Exzenterbuchse drehbar gelagert, die in einem Gehäuseteil des Scheibenwischerantriebs aufgenommen ist, beispielsweise im Getriebegehäuse, welches die Getriebebauteile beherbergt. Über die Exzenterbuchse ist der Achsabstand zwischen den sich kreuzenden Achsen der Ankerwelle und der Abtriebswelle einzustellen.

Als axiales Sicherungsteil ist zwischen Abtriebswelle und Exzenterbuchse ein Sicherungsring vorgesehen, der unmittelbar benachbart zu einer der Stirnseiten der Exzenterbuchse angeordnet ist. Da der Sicherungsring fest mit der Abtriebswelle verbunden ist, übt der Sicherungsring die gleiche Drehbewegung wie die Abtriebswelle aus. Um eine Abnutzung bei der Relativbewegung zwischen dem Sicherungsring und der Stirnseite der Exzenterbuchse zu vermeiden, die dadurch entstehen kann, dass der Sicherungsring an der Stirnseite der Exzenterbuchse bei der Drehbewegung entlangschleift, ist in die Stirnseite der Exzenterbuchse eine ringförmige Schutznut eingebracht, die zur Aufnahme eines der Exzenterbuchse zugewandten, stirnseitigen Teils des Sicherungsrings dient. Dadurch ist es möglich, dass trotz eines unmittelbaren Kontaktes zur Stirnseite der Exzenterbuchse und trotz der Relativdrehbewegung eine Beschädigung der Exzenterbuchse vermieden wird. Axial überstehende Teile des Sicherungsrings greifen in die Schutznut an der Stirnseite der Exzenterbuchse ein und können daher nicht zu einer Beschädigung führen. Dies betrifft insbesondere schmale, scharfkantige bzw. spitze axiale Vorsprünge am Sicherungsring, beispielsweise Grate, die herstellungsbedingt an der Stirnseite des Sicherungsrings vorhanden sind. Derartige Teile des Sicherungsrings nehmen aufgrund des Einragens in die Schutznut an der Stirnseite der Exzenterbuchse nicht an der axialen Abstützung teil und können daher die Exzenterbuchse auch nicht beschädigen. Die axiale Abstützung erfolgt vielmehr über glattflächige Abschnitte des Sicherungsrings, wodurch eine Beschädigung der Exzenterbuchse ausgeschlossen ist.

Als Sicherungsring wird insbesondere ein im Stanzverfahren hergestelltes Blechteil eingesetzt, vorzugsweise eine Speed-Nut, die üblicherweise nach dem Aufschieben der Exzenterbuchse auf die Abtriebswelle ebenfalls auf die Abtriebswelle aufgeschoben wird und sich mit ihren radial innen liegenden Laschen bzw. Krallen mit der Abtriebswelle verspannt bzw. verkrallt, wodurch ein axiales Verschieben der Speed-Nut entgegen der Aufschieberichtung ausgeschlossen ist und zugleich die Exzenterbuchse in axialer Richtung gesichert ist.

Eine derartige Speed-Nut kann als Feinstanzteil hergestellt werden, wobei bedingt durch den Stanzprozess im Übergang zwischen dem radial außen liegenden, ringförmigen Abschnitt der Speed-Nut und den federnden, radial innen liegenden Laschen, welche von der Stirnseite der Exzenterbuchse axial weggebogen sind, ein Grat entstehen kann, der der Exzenterbuchse zugewandt ist. Dieser Grat ragt in die Schutznut an der Stirnseite der Exzenterbuchse ein. Diese Vorgehensweise ermöglicht es somit, im Stanzverfahren hergestellte Sicherungsringe zu verwenden, auch wenn diese bedingt durch das Herstellungsverfahren einen scharfkantigen Grat aufweisen, ohne die Notwendigkeit einer Nachbearbeitung des Sicherungsringes vorsehen zu müssen.

Die ringförmige Schutznut ist bevorzugt mit radialem Abstand sowohl zur Innenseite als auch zur Außenseite der Exzenterbuchse in die Stirnseite eingebracht. Dadurch besteht eine verhältnismäßige große Auflagefläche zwischen dem Sicherungsring und der Stirnseite, wobei es grundsätzlich auch möglich ist, die Schutznut unmittelbar an der radial innen liegenden Seite oder der radial außen liegenden Seite einzubringen; in diesem Fall weist die Schutznut die Querschnittsgestalt einer radial innen liegenden bzw. außen liegenden Ringschulter auf, die im Übergang zwischen Stirnseite und innen bzw. außen liegender Wandseite angeordnet ist.

Die Exzenterbuchse ist beispielsweise als Sinterteil ausgeführt und weist daher eine hohe Festigkeit auf.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Scheibenwischvorrichtung in einem Kraftfahrzeug,
- Fig. 2: eine Draufsicht auf einen Scheibenwischerantrieb für die Scheibenwischvorrichtung, mit einem elektromotorischen Antrieb, der über ein Getriebe eine Abtriebswelle antreibt,
- Fig. 3: einen Ausschnitt aus der Abtriebswelle, die in einer Exzenterbuchse drehbar gelagert ist, mit einem als Speed-Nut ausgeführten Sicherungsring an der Stirnseite der Exzenterbuchse.

In den Figuren sind gleiche Bauteile mit gleichen Bezugszeichen versehen.

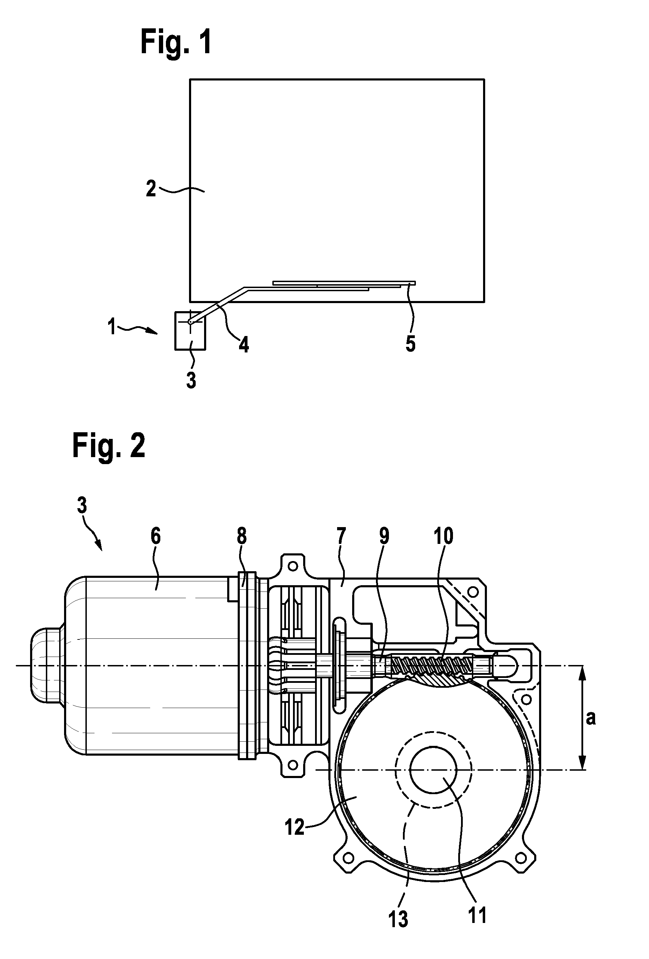

In Fig. 1 ist eine Scheibenwischvorrichtung 1 für ein Kraftfahrzeug dargestellt, die zur Reinigung einer Fahrzeugscheibe 2 dient. Die Scheibenwischvorrichtung 1 umfasst einen Scheibenwischerantrieb 3, der einen Wischarm 4 in eine pendelnde Drehbewegung versetzt, wobei der Wischarm 4 Träger eines auf der Fahrzeugscheibe 2 aufliegenden Wischblattes 5 ist.

In Fig. 2 ist der Scheibenwischerantrieb 3 im Detail dargestellt. Der Scheibenwischerantrieb 3 umfasst in einem Polgehäuse 6 einen elektrischen Antriebsmotor, dessen Ankerwelle 9 mit einer Schnecke 10 versehen ist, welche mit einem Schneckenrad 12 auf einer Abtriebswelle 11 kämmt. Die Abtriebswelle 11 ist mit dem Wischarm verbunden und versetzt diesen in die pendelnde Drehbewegung.

Die Schnecke 10 auf der Ankerwelle 9 bildet gemeinsam mit dem Schneckenrad 12 auf der Abtriebswelle 11 ein Getriebe zur Übertragung der Drehbewegung der Ankerwelle 9 auf die Abtriebswelle 11. Die Getriebebauteile sind in einem Getriebegehäuse 7 aufgenommen, das über einen Flansch 8 mit einem Polgehäuse 6 verbunden ist, welches den elektrischen Antriebsmotor beherbergt.

Die Abtriebswelle 11 ist in einer Exzenterbuchse 13 drehbar gelagert, wobei die Exzenterbuchse 13 mit der Abtriebswelle 11 axial verbunden ist. Die Exzenterbuchse 13 erlaubt die Einstellung eines gewünschten Achsabstandes a zwischen der Ankerwelle 9 und der Abtriebswelle 11. Die Exzenterbuchse 13 ist im Getriebegehäuse 7 fest aufgenommen, in der Exzenterbuchse befinden sich Lagerstellen für die drehbare Lagerung der Abtriebswelle 11, so dass die Abtriebswelle 11 über die Exzenterbuchse 13 im Getriebegehäuse gelagert ist.

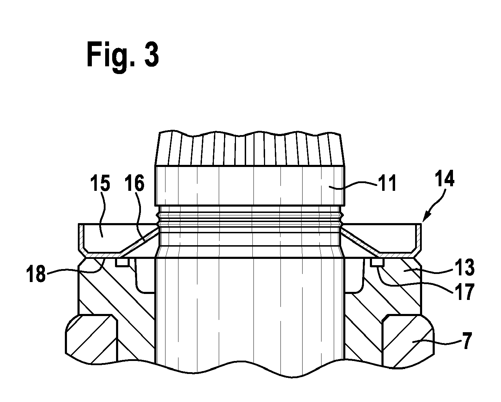

Wie Fig. 3 zu entnehmen, ist an der Abtriebswelle 11 ein Sicherungsring 14 gehalten, der im Ausführungsbeispiel als Speed-Nut ausgebildet ist und im Wege des Stanzverfahrens aus einem Blechteil hergestellt werden kann. Der Sicherungsring 14 dient zur axialen Sicherung zwischen der Abtriebswelle 11 und der Exzenterbuchse 13. Der Sicherungsring 14 befindet sich auf dem axial aus der Exzenterbuchse 13 axial herausragenden Abschnitt der Abtriebswelle 11 und ist fest mit der Abtriebswelle 11 verkrallt, so dass beim Umlaufen der Abtriebswelle 11 auch der Sicherungsring 14 die Drehbewegung der Abtriebswelle ausführt.

Bei der Ausbildung als Speed-Nut besitzt der Sicherungsring 14 einen ringförmigen, radial außen liegenden, in Form einer Scheibe ausgebildeten Abschnitt 15, an den sich radial nach innen einteilig ausgebildete, in Umfangsrichtung segmentierte Laschen 16 anschließen, die gegenüber der Ebene des Sicherungsringes geneigt sind und sich am Außenmantel der Abtriebswelle 11 verkrallen. Die scheibenförmige Stirnseite des Abschnittes 15 liegt flächig an der zugewandten Stirnseite 18 der Exzenterbuchse 13 an. Da die Exzenterbuchse 13 fest im Getriebegehäuse 7 aufgenommen ist, übt der Sicherungsring 14 eine Relativdrehbewegung gegenüber der Exzenterbuchse 13 aus.

Um sicherzustellen, dass axial überstehende Grate oder sonstige scharfkantige Erhebungen, die sich über die Stirnseite des Sicherungsringes 14 erheben, nicht zu einer Beschädigung der Stirnseite 18 der Exzenterbuchse 13 führen, indem sich derartige Grate in die Stirnseite der Exzenterbuchse eingraben und Einkerbungen verursachen, ist in die Stirnseite der Exzenterbuchse eine ringförmig umlaufende Schutznut 17 eingebracht. Im Ausführungsbeispiel gemäß Fig. 3 liegt die ringförmige Schutznut 17 radial im Übergangsbereich zwischen dem ringförmigen Abschnitt 15 und den Laschen 16 des Sicherungsringes 14. In diesem Übergangsbereich kann, bedingt durch das Stanzverfahren zur Herstellung des Sicherungsringes, ein axial überstehender Grat entstehen, der in der gezeigten Zusammenbauposition in die Schutznut 17 einragt, wodurch einerseits ein flächiger Kontakt zwischen Sicherungsring und Stirnseite 18 der Exzenterbuchse sichergestellt und zum andern eine Beschädigung der Stirnseite der Exzenterbuchse ausgeschlossen ist.

Die ringförmige Schutznut 17 befindet sich vorteilhafterweise mit radialem Abstand sowohl zur Innenwand als auch zur Außenwand der Exzenterbuchse 13.

## Patentansprüche

1. Scheibenwischerantrieb, mit einer Abtriebswelle (11), die in einer in einem Gehäuseteil des Scheibenwischerantrieb (3) aufgenommenen Exzenterbuchse (13) drehbar gelagert ist,
**dadurch gekennzeichnet, dass** an der Abtriebswelle (11) ein Sicherungsring (14) gehalten ist, der unmittelbar benachbart zu einer Stirnseite (18) der Exzenterbuchse (13) angeordnet ist, und dass in die Stirnseite (18) der Exzenterbuchse (13) eine ringförmige Schutznut (17) zur Aufnahme eines der Exzenterbuchse (13) zugewandten, stirnseitigen Teils des Sicherungsrings (14) eingebracht ist.

2. Scheibenwischerantrieb nach Anspruch 1,
**dadurch gekennzeichnet, dass** das stirnseitige Teil ein Grat am Sicherungsring (14) ist.

3. Scheibenwischerantrieb nach Anspruch 1 oder 2,
**dadurch gekennzeichnet, dass** der Sicherungsring (14) als Speed-Nut ausgeführt ist.

4. Scheibenwischerantrieb nach Anspruch 3,
**dadurch gekennzeichnet, dass** die ringförmige Schutznut (17) in Radialrichtung dem Übergangsbereich zwischen dem ringförmigen Abschnitt (15) und federnden Laschen (16) der Speed-Nut zugeordnet ist.

5. Scheibenwischerantrieb nach einem der Ansprüche 1 bis 4,
**dadurch gekennzeichnet, dass** der Sicherungsring (14) an einem aus der Exzenterbuchse (13) herausragenden Abschnitt der Abtriebswelle (11) gehalten ist.

6. Scheibenwischerantrieb nach einem der Ansprüche 1 bis 5,
**dadurch gekennzeichnet, dass** die ringförmige Schutznut (17) mit radialem Abstand zur Innenwand der Exzenterbuchse (13) in die Stirnseite (18) eingebracht ist.

7. Scheibenwischerantrieb nach einem der Ansprüche 1 bis 6,
**dadurch gekennzeichnet, dass** die ringförmige Schutznut (17) mit radialem Abstand zur Außenwand der Exzenterbuchse (13) in die Stirnseite eingebracht ist.

8. Scheibenwischerantrieb nach einem der Ansprüche 1 bis 7,
**dadurch gekennzeichnet, dass** der Sicherungsring (14) als Stanzteil ausgeführt ist.

9. Scheibenwischerantrieb nach einem der Ansprüche 1 bis 8,
**dadurch gekennzeichnet, dass** die Exzenterbuchse (13) als Sinterbuchse ausgeführt ist.
